# EUROPÄISCHE PATENTSCHRIFT

(11) **EP 1 306 351 B1**
(45) Veröffentlichungstag und Bekanntmachung des Hinweises auf die Patenterteilung: **12.09.2007**
(21) Anmeldenummer: 01114506.7
(22) Anmeldetag: 15.06.2001
(51) Int. Cl.: C01B 3/56, C01B 3/48, B01D 53/14

(54) **Verfahren zur Herstellung eines schwefelarmen Reformatgases zur Verwendung in einem Brennstoffzellensystem**
Method for the preparation of a low-sulfur reformate gas for use in a fuel cell system
Procédé de fabrication de gaz reformat a faible teneur en soufre pour l'utilisation en un système de piles à combustibles

(43) Veröffentlichungstag der Anmeldung: 02.05.2003
(73) Patentinhaber: Umicore AG & Co. KG, 63457 Hanau-Wolfgang (DE)
(72) Erfinder: Baumann, Frank Dr., 63755 Alzenau (DE); Wieland, Stefan Dr., 63069 Offenbach (DE)
(74) Vertreter: Vossius & Partner

(56) Entgegenhaltungen:
- US-A- 4 181 503
- US-A- 4 436 532
- US-A- 4 816 353
- US-A- 5 932 181

## Beschreibung

Die Erfindung betrifft ein mehrstufiges Verfahren zur Herstellung eines schwefelarmen, Reformates aus einem Kohlenwasserstoffgemisch zur Verwendung in einem Brennstoffzellensystem.

Brennstoffzellen zur Erzeugung elektrischer Energie werden überwiegend mit Wasserstoff als Brennstoff betrieben. Für den Einsatz von Brennstoffzellen in Kraftfahrzeugen ist geplant, den Wasserstoff an Bord des Fahrzeugs mit Hilfe eines Wasserstofferzeugungssystems aus Kohlenwasserstoffen zu erzeugen.

Für die Produktion von Wasserstoff können bekanntermaßen Kohlenwasserstoffe bei hohen Temperaturen in der Gegenwart von Wasserdampf an einem geeigneten Katalysator zu Wasserstoff, Kohlenmonoxid und Kohlendioxid umgesetzt werden. Die Reaktion ist stark endotherm und läuft zum Beispiel nach folgender Reaktionsgleichung ab:

C₈H₁₈+8H₂O→8CO+17H₂ ΔH=+1250 kJ/mol (1)

Charakteristisch für diese Reaktion ist das sogenannte Dampf/Kohlenstoff-Verhältnis S/C (Steam to Carbon ratio). In der Reaktionsgleichung (1) ist S/C gleich 1. Die Umsetzung eines Kohlenwasserstoffe enthaltenden Gasgemisches in ein wasserstoffreiches Produktgasgemisch wird als Reformierung bezeichnet. Das resultierende Produktgasgemisch ist das sogenannte Reformat oder Reformatgas.

Eine weitere, bekannte Möglichkeit zur Erzeugung von Wasserstoff ist die katalytische, partielle Oxidation CPO (Catalytic Partial Oxidation). Hierbei werden die Kohlenwasserstoffe in Gegenwart von Sauerstoff an einem Katalysator zum Beispiel gemäß Reaktionsgleichung (2) zu Kohlenmonoxid und Wasserstoff umgesetzt. Eine wichtige Kenngröße für die partielle Oxidation ist die Luftzahl λ, die als Verhältnis aus eingesetzter Molanzahl Sauerstoff zu der für eine vollständige Oxidation benötigten Molanzahl Sauerstoff definiert ist (siehe Reaktionsgleichung (3)):

C₈H₁₈+4O₂→8CO_{(g)}+9H₂ λ=0,32 ΔH=-685 kJ/mol (2)

C₈H₁₈+12.5O₂→8CO₂+9H₂O λ=1 ΔH=-5102 kJ/mol (3)

Eine dritte Möglichkeit der Wasserstoffgewinnung ist die sogenannte autotherme Dampfreformierung, bei der die exotherme katalytische, partielle Oxidation mit der endothermen Dampfreformierung kombiniert wird. Das Eduktgasgemisch für die autotherme Dampfreformierung wird zusätzlich zu dem Dampf/Kohlenstoff-Verhältnis durch die Luftzahl λ charakterisiert.

Zur weitgehenden Umsetzung des bei der Reformierung gebildeten Kohlenmonoxids sind der Reformierungsstufe ein oder mehrere Verfahrensstufen nachgeschaltet, in der Kohlenmonoxid in einer exothermen Shiftreaktion gemäß Gleichung (4) mit Wasserdampf zu Kohlendioxid und Wasserstoff umgesetzt wird.

CO+H₂O←→H₂+CO₂ ΔH≺0 (4)

Der restliche Kohlenmonoxidgehalt des Reformates entspricht der Gleichgewichtskonzentration bei der Temperatur am Ausgang des Shiftreaktors. Um den Kohlenmonoxidgehalt des Reformates unter 1 Vol.-% zu vermindern wird die Shiftreaktion daher häufig auf zwei Stufen verteilt, eine Hochtemperatur-Shiftstufe und eine Niedertemperatur-Shiftstufe. Alternativ zur Niedertemperatur-Shiftstufe können auch sogenannte Gastrennmembranen auf der Basis von Palladiumlegierungen eingesetzt werden.

Die EP 0 884 271 A1 beschreibt ein Verfahren zum Betrieb einer Methanolreformierungsanlage, bei dem im Reformierungsbetrieb Methanol in einem Methanolreformierungsreaktor unter Verwendung eines Methanolreformierungskatalysators reformiert wird. Die Offenlegungsschrift befaßt sich mit dem Problem der Deaktivierung von Methanolreformierungskatalysatoren auf der Basis von Cu/ZnO bei hoher Belastung. Zur Regenerierung des Katalysators wird der Reformierungsbetrieb periodisch für Katalysatorreaktivierungsphasen unterbrochen. In den Regenerierungsphasen wird der Methanolreformierungskatalysator gegenüber dem Normalbetrieb mit reduzierter Belastung und/oder höherer Temperatur betrieben oder mit Inertgas gespült.

In der WO 01/00524 wird ein Verfahren zur Regenerierung von Reformingskatalysatoren beschrieben, bei dem die Regeneration durch Variation der zugeführten Dampf-, Luft- oder Brennstoffmenge während des kontinuierlichen Betriebes erfolgt. Als weitere Möglichkeiten zur Regeneration wird die externe Beheizung des Reaktors unter gleichbleibenden Eduktströmen sowie die Zugabe von Additiven beschrieben.

Für die Gewinnung von Wasserstoff durch Reformierung von Kohlenwasserstoffen ist es wünschenswert, übliche Motorkraftstoffe einzusetzen. Diese aus natürlichen Quellen stammenden Kohlenwasserstoffe weisen stets auch einen mehr oder weniger hohen Gehalt an Schwefelverbindungen auf. Dieselkraftstoff enthält typischerweise zwischen 100 und 1000 ppm Schwefel. Der Schwefelgehalt von Benzin liegt gewöhnlich unter 100 ppm. Besonders schwefelarmes Superbenzin weist einen Schwefelgehalt von weniger als 10 ppm auf.

Der Schwefelgehalt der Kohlenwasserstoffe vermindert die katalytische Aktivität der Katalysatoren des Wasserstofferzeugungssystems sowie die Aktivität der Anodenkatalysatoren der Brennstoffzellen.

Aufgabe der vorliegenden Erfindung ist es daher, ein Verfahren zur Herstellung eines schwefelarmen Reformatgases anzugeben, dessen restlicher Schwefelgehalt so gering ist, daß die Vergiftung der Anodenkatalysatoren weitgehend vermieden wird. Außerdem soll das Verfahren die Regeneration der Reformierungs- und Shift-Katalysatoren im kontinuierlichen Betrieb ermöglichen.

Diese Aufgabe wird durch das in Anspruch 1 definierte Verfahren gelöst. Die Unteransprüche spezifizieren vorteilhafte Ausführungsformen des Verfahrens.

Die Erfindung geht von dem aus dem Stand der Technik bekannten Verfahren zur Herstellung eines wasserstoffreichen Reformatgases aus Kohlenwasserstoffen oder Kohlenwasserstoffgemischen aus. Ein solches Verfahren besteht gewöhnlich aus wenigstens zwei Verfahrensstufen, wobei das Reformatgas in der ersten Stufe durch katalytische Dampfreformierung (STR) eines Eduktgasgemisches gewonnen wird, welches schwefelhaltige Kohlenwasserstoffe und Dampf enthält und durch sein Dampf/Kohlenstoff-Verhältnis S/C charakterisiert wird. Der Kohlenmonoxidgehalt des so gebildeten Reformatgases wird in einer zweiten und folgenden Stufen soweit vermindert, daß die katalytische Aktivität des Anodenkatalysators durch Kohlenmonoxid nicht mehr wesentlich beeinträchtigt wird. Hierfür ist ein Kohlenmonoxidgehalt von weniger als 100, bevorzugt weniger als 50 ppm, ausreichend.

Das Verfahren ist besonders für die Reformierung von Kohlenwasserstoffen aus natürlichen Quellen geeignet, welche stets auch einen gewissen Gehalt an Schwefelverbindungen aufweisen. Diese Schwefelverbindungen werden auf Grund der reduktiven Bedingungen bei der Reformierung im wesentlichen zu Schwefelwasserstoff reduziert. Das die Reformierungsstufe verlassende Reformat kann jedoch auch noch Spuren von nicht zu Schwefelwasserstoff umgesetzten organischen Schwefelverbindungen enthalten.

Ein Teil der Schwefelverbindungen wird schon von den Reformierungs- und Shiftkatalysatoren absorbiert. Der Schwefelgehalt des Reformates nach Verlassen der katalytischen Stufen ist jedoch noch immer zu hoch für die nachfolgenden Komponenten.

Besonders gefährdet sind die Anodenkatalysatoren der Brennstoffzellen, aber auch die eventuell zur Verminderung des Kohlenmonoxidgehaltes verwendeten Niedertemperatur-Shiftkatalysatoren und Gastrennmembranen. Während die Katalysatoren der Reformierungsstufe und der Hochtemperatur-Shiftstufe durch eine Temperaturbehandlung oberhalb von 600 °C entschwefelt und damit in ihrer katalytischen Aktivität weitgehend regeneriert werden können, ist dies bei den Anodenkatalysatoren, bei den Niedertemperatur-Shiftkatalysatoren sowie bei den eventuell verwendeten Gastrennmembranen nicht möglich. Übliche Polymerelektrolyt-Brennstoffzellen werden bei Temperaturen oberhalb von etwa 140 °C zerstört, und würden somit eine Regeneration nicht überstehen. Die Vergiftung der Anodenkatalysatoren durch Schwefelverbindungen im Reformat ist somit irreversibel.

Die Katalysatoren der Niedertemperatur-Shiftstufen werden ebenfalls irreversibel durch die Schwefelkomponenten im Reformatgas vergiftet, da sie entweder auf Grund des Verfahrensablaufes der Wasserstoffgewinnung nicht auf die für die Entschwefelung erforderliche Temperatur aufgeheizt werden können oder nicht genügend temperaturbeständig sind. Auch die häufig zur Entfernung von Kohlenmonoxid aus dem Reformat eingesetzten Gastrennmembranen auf der Basis von Palladium müssen vor Schwefelverbindungen geschützt werden. Ihre Permeationsleistung wird durch Schwefelverbindungen irreversibel geschädigt.

Erfindungsgemäß werden diese empfindlichen Komponenten vor den schädlichen Schwefelverbindungen dadurch geschützt, daß die im Reformatgas enthaltenen Schwefelspezies an einem Schwefelabsorber absorbiert werden, welcher entweder direkt hinter der ersten Verfahrensstufe (Reformierungsstufe) oder erst nach der zweiten Verfahrensstufe zur Verminderung des Kohlenmonoxidgehaltes angeordnet wird. Hierdurch kann der Schwefelgehalt des Reformatgases soweit vermindert werden, daß die nachfolgenden Komponenten nicht mehr merkbar in ihrer Leistungsfähigkeit durch Schwefelvergiftung beeinträchtigt werden.

Der Schwefelabsorber enthält ein geeignetes Schwefelabsorbens. Geeignete Absorbentien für das Verfahren sind ZnO, Fe₂O₃, Mn₂O₃, CuO und Mischungen davon. Die Temperatur des Absorbers wird während der Betriebsdauer des Verfahrens ständig in einem Temperaturintervall gehalten, in welchem die Absorptionsfähigkeit des Absorbens für Schwefelverbindungen optimal ist. Das optimale Temperaturintervall für Zinkoxid liegt zwischen etwa 350 und 400 °C. Mischungen von Fe₂O₃ und Mn₂O₃ haben ein optimales Temperaturintervall zwischen 200 und 300 °C.

Der Schwefel liegt im Reformat auf Grund der reduzierenden Bedingungen im wesentlichen in Form von Schwefelwasserstoff H₂S vor. Das Reformat kann jedoch auch Spuren von nicht vollständig zu Schwefelwasserstoff umgesetzten organischen Schwefelverbindungen enthalten. Zur Absorption dieser Schwefelkomponenten können dem Absorbens Zeolithe beigemischt werden.

Diese Absorbentien können in Form von Tabletten oder Pellets im Reformatgasstrom angeordnet oder in Form einer Beschichtung auf inerten Wabenkörpern aufgebracht werden. Nach Erschöpfung seiner Absorptionskapazität kann der Absorber durch einen Absorber mit frischem Absorbens ersetzt werden. Die Absorptionskapazität des Absorbers kann durch Vergrößern der Masse des verwendeten Absorbens so groß gewählt werden, daß der Austausch im Rahmen normaler Wartungsintervalle vorgenommen werden kann.

Für die Dampfreformierung werden bevorzugt Katalysatoren eingesetzt, die wenigstens eines der Edelmetalle der Platingruppe des Periodensystems der Elemente auf einem hochoberflächigen Trägermaterial enthalten, zum Beispiel Platin und/oder Rhodium auf aktivem Aluminiumoxid. Dieses Katalysatormaterial kann in Form einer Beschichtung auf inerten Wabenkörpern aufgebracht sein. Reformierungskatalysatoren auf der Basis von Pd/ZnO, wie zum Beispiel der in der EP 1 063 011 A1 beschriebene PdZn/ZnO-Legierungskatalysator, können ebenfalls eingesetzt werden. Bevorzugt werden jedoch Rhodiumkatalysatoren verwendet, die unter den reduzierenden Bedingungen bei der Reformierung bis zu Temperaturen von 900 bis 1000 °C stabil sind.

Das Verfahren kann mit aliphatischen oder aromatischen Kohlenwasserstoffen oder Kohlenwasserstoffgemischen sowie mit Alkoholen betrieben werden. Insbesondere eignen sich Erdgas, aus biologischen Abfällen gewonnenes Biogas, Benzin, Dieselöl, Methanol oder Ethanol. Bevorzugt wird das Dampf/Kohlenstoff-Verhältnis S/C abhängig vom verwendeten Kohlenwasserstoff auf einen Wert zwischen 0,7 und 4 eingestellt. Die optimale Temperatur für die Durchführung der Dampfreformierung hängt von der Art der Katalysatoren ab. Im Falle von edelmetallhaltigen Reformierungskatalysatoren liegt diese Temperatur im Bereich zwischen 400 und 900 °C.

Darüber hinaus ist die optimale Reformierungstemperatur abhängig von der Zusammensetzung des Eduktgasgemisches und vom gewählten Reformierungsverfahren (reine Dampfreformierung (STR) oder autotherme Dampfreformierung (ATR)). Bei der Niedertemperatur-Dampfreformierung von Erdgas liegt die optimale Temperatur zwischen 400 und 500 °C. Für Methanol liegt die optimale Reformierungstemperatur sowohl für das STR- als auch für das ATR-Verfahren zwischen 400 und 450 °C. Für die Reformierung von Benzin oder Diesel liegt die optimale Temperatur für STR und ATR zwischen 600 und 900 °C.

Das Reformatgas kann bis zu 30 Vol.-% Kohlenmonoxid enthalten. Dieser Gehalt des Reformatgases an Kohlenmonoxid wird in der zweiten Verfahrensstufe bevorzugt an einem Hochtemperatur-Shiftkatalysator (HTS) bei einer Temperatur zwischen 350 und 550 °C auf einen dem thermischen Gleichgewicht entsprechenden Wert von etwa 3 Vol.-% vermindert.

Zur weiteren Verminderung des Kohlenmonoxidgehaltes kann das Reformat in einer dritten Verfahrensstufe mit einem Niedertemperatur-Shiftkatalysator bei einer Temperatur zwischen 180 und 300 °C in Kontakt gebracht werden. Entsprechend dem thermischen Gleichgewicht liegt der Kohlenmonoxidgehalt des Reformats nach Verlassen der dritten Stufe bei einem Wert unter 1 Vol.-%.

Der Schwefelabsorber kann sowohl hinter der ersten Verfahrensstufe als auch hinter der zweiten Verfahrensstufe angeordnet werden. In beiden Fällen wird die optimale Absorbertemperatur durch entsprechendes Temperieren des Reformatgases mit einem Wärmetauscher eingestellt.

Wie schon ausgeführt, verbleibt ein Teil der im Reformatgas enthaltenen Schwefelverbindungen auf den Reformierungskatalysatoren und gegebenenfalls auf den Hochtemperatur-Shiftkatalysatoren. Dadurch vermindert sich deren katalytische Aktivität kontinuierlich und muß von Zeit zu Zeit durch Entfernen des Schwefels regeneriert werden.

Die Regeneration dieser Katalysatoren erfolgt während des kontinuierlichen Betriebes des Wasserstofferzeugungssystems. Hierzu wird die Temperatur der Katalysatoren periodisch auf über 600 °C erhöht. Die optimale Temperatur für die Regeneration hängt von den verwendeten Katalysatoren ab. Durch die Erhöhen der Temperatur werden die auf den Katalysatoren absorbierten Schwefelverbindungen unter den reduzierenden Bedingungen im Wasserstofferzeugungssystem im wesentlichen in Form von Schwefelwasserstoff desorbiert. Während der Regenerationsphase enthält das Reformat eine erheblich höhere Konzentration an Schwefelverbindungen als während des normalen Betriebs. Der nachgeschaltete Schwefelabsorber muß daher so ausgelegt sein, daß er in der Lage ist, auch diese erhöhten Konzentrationen aus dem Reformat zu entfernen.

Nur durch die erfindungsgemäße Verwendung eines Schwefelabsorbers wird es überhaupt erst möglich, die Katalysatoren des Wasserstoff-Erzeugungssystems zu regenerieren, ohne die nachgeschalteten Komponenten wie Niedertemperatur-Shiftkatalysatoren, Gastrennmembranen und Brennstoffzellen durch Überfluten mit Schwefelverbindungen irreversibel zu schädigen. Ein Vorteil des vorgeschlagenen Verfahrens ist es also, daß auch unter wechselnden Betriebsbedingungen, wie zum Beispiel in der Regenerationsphase, keine Schwefelverbindungen in die Brennstoffzelle gelangen können.

Die möglichen Strategien zur Erhöhung der Temperatur während der Regenerationsphasen hängen von der aktuellen Fahrweise des Wasserstofferzeugungssystems ab. Wird die Reformierungsstufe als reine Dampfreformierung betrieben, so kann die Temperatur zum Beispiel durch externe Beheizung des Reaktors oder durch entsprechende Vorheizung des Eduktgasstromes angehoben werden. Bevorzugt wird jedoch die Temperatur durch Vermindern des Dampf/Kohlenstoff-Verhältnisses bei sonst gleichbleibenden Betriebsbedingungen, das heißt bei gleichbleibender Wärmezufuhr, erhöht.

Das Wasserstofferzeugungssystem kann durch Zufuhr von Luft zum Eduktgasgemisch auch autotherm betrieben werden. In diesem Fall wird das Eduktgasgemisch zusätzlich zum Dampf/Kohlenstoff-Verhältnis noch durch die Luftzahl λ charakterisiert. Beim kontinuierlichen Betrieb des Wasserstofferzeugungssystems liegt die Luftzahl typischerweise im Intervall zwischen 0 und 0,5. Zur Regeneration der Katalysatoren kann die Temperatur des Reformatgases durch Erhöhen der Luftzahl des Eduktgasgemisches auf die notwendige Desorptionstemperatur für die Schwefelverbindungen angehoben werden. Alternativ oder in Ergänzung hierzu kann, wie auch schon im Fall der reinen Dampfreformierung, das Dampf/Kohlenstoff-Verhältnis während der Regenerationsphase abgesenkt werden.

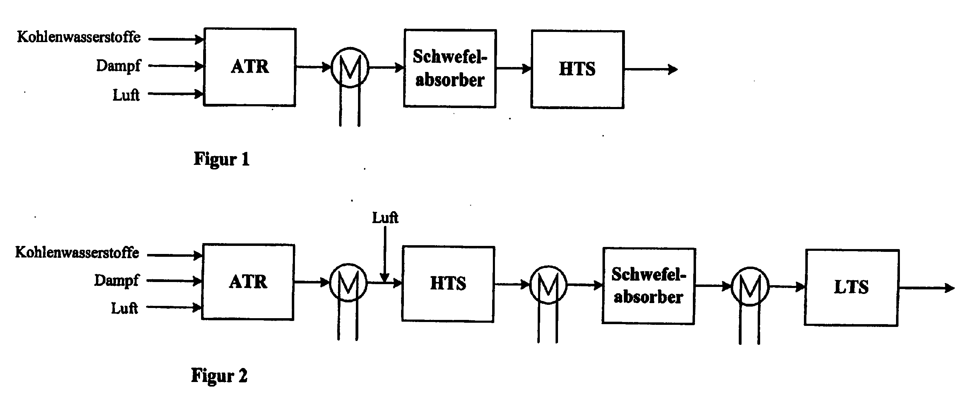

Zur weiteren Erläuterung des erfindungsgemäßen Verfahrens dienen die Figuren 1 und 2. Es zeigen:
**Figur 1:** Verfahrensschema mit Schwefelabsorber nach der ersten Verfahrensstufe
**Figur 2:** Verfahrensschema mit Schwefelabsorber nach der zweiten Verfahrensstufe

Figur 1 zeigt ein Wasserstofferzeugungsschema aus einer Reformierungsstufe, die autotherm betrieben wird (ATR) und einer Hochtemperatur-Shiftstufe (HTS) zur Entfernung von Kohlenmonoxid aus dem Reformat. Zwischen ATR-Stufe und HTS-Stufe ist der Schwefelabsorber eingeschaltet. Die Luftzahl λ des Eduktgemisches und seine Vorwärmtemperatur werden so gewählt, daß sich am Ausgang der ATR-Stufe unter Reformierungsbedingungen abhängig von den verwendeten Katalysatoren und der Zusammensetzung des Eduktgasgemisches eine Temperatur zwischen 400 und 900 °C einstellt.

Hinter der ATR-Stufe von Figur 1 befindet sich ein Wärmetauscher, der die Temperatur des Reformates auf die optimale Arbeitstemperatur des Schwefelabsorbers von etwa 400 °C vermindert. Die HTS-Stufe wird ebenfalls bei 400 °C betrieben.

Das Reformat enthält nach Verlassen der HTS-Stufe praktisch keine Schwefelverbindungen mehr. In der Ausführungsform des Verfahrens von Figur 1 werden nur die Katalysatoren der Reformierungsstufe durch Schwefelverbindungen deaktiviert. Zur Regeneration dieser Katalysatoren werden während des laufenden Betriebes die Luftzahl des Eduktgasstromes aus Kohlenwasserstoff, Wasserdampf und Luft erhöht und/oder das Dampf/Kohlenstoff-Verhältnis vermindert. Die Temperatur am Ausgang der ATR-Stufe wird dadurch um 100 bis 200 °C erhöht.

Figur 2 zeigt ein Wasserstofferzeugungsschema aus einer Reformierungsstufe, die autotherm betrieben wird (ATR), einer Hochtemperatur-Shiftstufe (HTS) und einer Niedertemperatur-Shiftstufe (LTS) zur Entfernung von Kohlenmonoxid aus dem Reformat. Zwischen HTS-Stufe und LTS-Stufe ist der Schwefelabsorber eingeschaltet. Die Luftzahl λ des Eduktgemisches und seine Vorwärmtemperatur werden so gewählt, daß sich am Ausgang der ATR-Stufe unter Reformierungsbedingungen abhängig von den verwendeten Katalysatoren und der Zusammensetzung des Eduktgasgemisches eine Temperatur zwischen 400 und 900 °C einstellt.

Die Betriebstemperatur der HTS-Stufe liegt in dieser Ausführungsform bei etwa 550 °C und die der LTS-Stufe bei 200 °C. Der Schwefelabsorber zur Entfernung der Schwefelkomponenten ist zwischen HTS- und LTS-Stufe eingeschaltet. Er wird wie im Fall von Figur 1 bei 400 °C betrieben. Zur Anpassung der Temperatur des Reformatgases an die Erfordernisse in den einzelnen Stufen sind entsprechende Wärmetauscher vorgesehen.

In der Ausführungsform des Verfahrens von Figur 2 werden die Katalysatoren der ATR-Stufe und der HTS-Stufe durch Schwefelverbindungen deaktiviert. Zur Regeneration dieser Katalysatoren werden während des laufenden Betriebes die Luftzahl des Eduktgasstromes aus Kohlenwasserstoff, Wasserdampf und Luft erhöht und/oder das Dampf/Kohlenstoff-Verhältnis vermindert. Die Temperatur am Ausgang der ATR-Stufe wird dadurch um 100 bis 200 °C erhöht. Falls erforderlich, kann während der Regeneration vor der HTS-Stufe weitere Luft zugefügt werden, um eine Desorptionstemperatur in der HTS-Stufe von etwa 700 °C zu erreichen.

## Patentansprüche

1. Mehrstufiges Verfahren zur Herstellung eines schwefelarmen Reformatgases zur Verwendung in einem Brennstoffzellensystem, durch katalytische Dampfreformierung (STR) eines schwefelhaltige Kohlenwasserstoffe und Dampf enthaltenden Eduktgasgemisches in einer ersten Stufe und Vermindern des Kohlenmonoxidgehaltes des so gewonnenen Reformates in einer zweiten Stufe, wobei das Eduktgasgemisch durch sein Dampf/Kohlenstoff-Verhältnis S/C charakterisiert wird, wobei
das die erste Stufe verlassende Reformat direkt oder erst nach Passieren der zweiten Stufe über einen Schwefelabsorber geleitet wird und die gegebenenfalls auf den Katalysatoren der beiden Verfahrensstufen absorbierten Schwefelkomponenten durch periodische Temperaturerhöhung desorbiert und ebenfalls dem Absorber zugeführt werden, wobei die Temperatur des Absorbers während der Dauer des Verfahrens ständig in einem für den Absorber optimalen Temperaturintervall gehalten wird.

2. Verfahren nach Anspruch 1, wobei
in der zweiten Stufe der Kohlenmonoxidgehalt des Reformates an einem Hochtemperatur-Shiftkatalysator (HTS) vermindert wird.

3. Verfahren nach Anspruch 2, wobei
das Verfahren eine zusätzliche, dritte Stufe aufweist, in der der Kohlenmonoxidgehalt des Reformates an einem Niedertemperatur-Shiftkatalysator (LTS) weiter vermindert wird.

4. Verfahren nach Anspruch 3, wobei
der Schwefelabsorber zwischen Hochtemperatur-Shiftkatalysator und Niedertemperatur-Shiftkatalysator angeordnet wird.

5. Verfahren nach einem der Ansprüche 1 bis 4, wobei
die für die Desorption der Schwefelkomponenten benötigte Temperaturerhöhung durch Vermindern des Dampf/Kohlenstoff-Verhältnisses des Eduktgasgemisches während des kontinuierlichen Betriebes erfolgt.

6. Verfahren nach einem der Ansprüche 1 bis 5, wobei
die Dampfreformierung (STR) durch Zufuhr von Luft zum Eduktgasgemisch autotherm (ATR) geführt wird, wobei zur Charakterisierung des Luftanteiles am Eduktgasgemisch die Luftzahl dient, und die für die Desorption der absorbierten Schwefelkomponenten notwendige Temperaturerhöhung durch Erhöhen der Luftzahl erfolgt.

7. Verfahren nach Anspruch 6, wobei
zur Temperaturerhöhung zusätzlich das S/C-Verhältnis vermindert wird.

8. Verfahren nach einem der Ansprüche 1 bis 7, wobei
die Temperatur des Absorbers durch Temperieren des Reformatgases im optimalen Temperaturintervall gehalten wird.

9. Verfahren nach einem der Ansprüche 1 bis 8, wobei
der Schwefelabsorber in regelmäßigen, für die jeweilige Anwendung typischen, Wartungsintervallen ausgewechselt wird.

10. Verwendung des Verfahrens nach einem der vorstehenden Ansprüche in stationären oder mobilen BrennstoSzellensystemen.

## Claims

1. A multi-step method for the preparation of a low-sulphur reformate gas for use in a fuel cell system by catalytic steam reforming (STR) of a reactant gas mixture containing sulphur-containing hydrocarbons and steam in a first step and reducing the carbon monoxide content of the obtained reformate in a second step, wherein the reactant gas mixture is **characterized by** its steam/carbon ratio S/C, wherein the reformate leaving the first step is either directly or only after passage of the second step passed over a sulphur absorber, and the sulphur components possibly absorbed on the catalysts of both method steps are desorbed by periodically raising the temperature and are also passed over the absorber, wherein the temperature of the absorber during the duration of the method is constantly kept within a temperature interval which is optimal for the absorber.

2. The method of claim 1, wherein in the second step the carbon monoxide content of the reformate is reduced on a high-temperature shift catalyst (HTS).

3. The method of claim 2, wherein the method has an additional third step, in which the carbon monoxide content of the reformate is further reduced on a low-temperature shift catalyst (LTS).

4. The method of claim 3, wherein the sulphur absorber is located between the high-temperature shift catalyst and the low-temperature shift catalyst.

5. The method of any of claims 1 to 4, wherein the increase in temperature required for the desorption of the sulphur components is achieved by reducing the steam/carbon ratio of the reactant gas mixtures during continuous operation.

6. The method of any of claims 1 to 5, wherein the steam reforming (STR) is operated autothermally (ATR) by introducing air to the reactant gas mixture, wherein the air portion of the reactant gas mixture is **characterized by** the air number, and the temperature increase required for the desorption of the absorbed sulphur components is achieved by increasing the air number.

7. The method of claim 6, wherein further the S/C ratio is reduced in order to increase the temperature.

8. The method of any of claims 1 to 7, wherein the temperature of the absorber is kept within the optimal temperature interval by adjusting the temperature of the reformate gas.

9. The method of any of claims 1 to 8, wherein the sulphur absorber is replaced regularly at service intervals which are typical for the particular application.

10. Use of the method of any of the preceding claims in stationary or mobile fuel cell systems.

## Revendications

1. Procédé à plusieurs étages pour la production d'un gaz de reformat pauvre en soufre en vue de son utilisation dans un système de piles à combustible, au moyen d'un reformage de vapeur catalytique (STR) d'un mélange de gaz d'éduit contenant des hydrocarbures soufrés et de la vapeur dans un premier étage, ainsi que d'une réduction de la teneur en monoxyde de carbone du reformat ainsi obtenu dans un second étage, le mélange de gaz d'éduit étant **caractérisé par** son rapport S/C vapeur/carbone,
**caractérisé en ce que**
le reformat quittant le premier étage est dirigé - directement ou seulement après passage du second étage - en passant par un absorbeur de soufre, et les composants de soufre absorbés le cas échéant sur les catalyseurs des deux étages du procédé sont désorbés par augmentation périodique de la température et sont également amenés à l'absorbeur, la température de l'absorbeur étant constamment maintenue dans un intervalle de température optimal pour l'absorbeur pendant la durée du procédé.

2. Procédé selon la revendication 1,
**caractérisé en ce que**
dans le second étage, la teneur en monoxyde de carbone du reformat est réduite auprès d'un catalyseur de déplacement à haute température (HTS).

3. Procédé selon la revendication 2,
**caractérisé en ce qu'**
il comporte en outre un troisième étage dans lequel la teneur en monoxyde de carbone du reformat est réduite davantage auprès d'un catalyseur de déplacement à basse température (LTS).

4. Procédé selon la revendication 3,
**caractérisé en ce que**
l'absorbeur de soufre est disposé entre le catalyseur de déplacement à haute température et le catalyseur de déplacement à basse température.

5. Procédé selon l'une des revendications 1 à 4,
**caractérisé en ce que**
l'augmentation de température nécessaire pour la désorption des composants de soufre s'effectue par diminution du rapport vapeur/carbone du mélange de gaz d'éduit pendant le fonctionnement continu.

6. Procédé selon l'une des revendications 1 à 5,
**caractérisé en ce que**
le reformage de vapeur (STR) est mené de manière autotherme (ATR) par amenée d'air vers le mélange de gaz d'éduit, la caractérisation de la fraction d'air dans le mélange de gaz d'éduit s'effectuant au moyen de l'indice d'air, et l'augmentation de température nécessaire pour la désorption des composants de soufre absorbés s'effectuant par augmentation de l'indice d'air.

7. Procédé selon la revendication 6,
**caractérisé en ce que**
pour augmenter la température, on réduit en plus le rapport S/C.

8. Procédé selon l'une des revendications 1 à 7,
**caractérisé en ce que**
la température de l'absorbeur est maintenue dans l'intervalle de température optimal en tempérant le gaz de reformat.

9. Procédé selon l'une des revendications 1 à 8,
**caractérisé en ce que**
l'absorbeur de soufre est remplacé à des intervalles d'entretien réguliers, caractéristiques de l'application considérée.

10. Utilisation du procédé selon l'une des revendications précédentes, dans des systèmes de piles à combustible stationnaires ou mobiles.
